(19) Europäisches Patentamt / European Patent Office / Office européen des brevets

(11) EP 4 040 218 A1

(12) **EUROPEAN PATENT APPLICATION**
published in accordance with Art. 153(4) EPC

(43) Date of publication:
**10.08.2022  Bulletin 2022/32**

(21) Application number: **20872582.0**

(22) Date of filing: **01.10.2020**

(51) International Patent Classification (IPC):
*G02B 30/00* (2020.01)      *G02B 27/01* (2006.01)
*G02F 1/13* (2006.01)        *G03B 35/18* (2021.01)
*H04N 13/125* (2018.01)      *H04N 13/31* (2018.01)
*H04N 13/317* (2018.01)      *H04N 13/346* (2018.01)
*H04N 13/363* (2018.01)      *H04N 13/366* (2018.01)
*H04N 13/376* (2018.01)

(52) Cooperative Patent Classification (CPC):
G02B 27/01; G02B 30/00; G02F 1/13; G03B 35/18;
H04N 13/125; H04N 13/31; H04N 13/317;
H04N 13/346; H04N 13/363; H04N 13/366;
H04N 13/376

(86) International application number:
**PCT/JP2020/037463**

(87) International publication number:
**WO 2021/066110 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.10.2019   JP 2019181595
                05.11.2019   JP 2019201019**

(71) Applicant: **Kyocera Corporation
Kyoto-shi Kyoto 612-8501 (JP)**

(72) Inventors:
• **KUSAFUKA, Kaoru
  Kyoto-shi, Kyoto 612-8501 (JP)**
• **SHIMADA, Takashi
  Kyoto-shi, Kyoto 612-8501 (JP)**
• **TADAUCHI, Ryo
  Kyoto-shi, Kyoto 612-8501 (JP)**
• **OGURA, Kenji
  Kyoto-shi, Kyoto 612-8501 (JP)**

(74) Representative: **TBK
Bavariaring 4-6
80336 München (DE)**

(54) **THREE-DIMENSIONAL DISPLAY DEVICE, CONTROLLER, THREE-DIMENSIONAL DISPLAY METHOD, THREE-DIMENSIONAL DISPLAY SYSTEM, AND MOBILE BODY**

(57)     A three-dimensional display device includes a display panel, an optical panel, and a controller. The display panel displays a parallax image. The optical panel defines a traveling direction of image light. The controller controls the parallax image based on positions of a first eye and a second eye of a user. The controller causes a predetermined proportion of pixels to display a black image. The predetermined proportion is determined to cause, for the first and second eyes of the user at a predetermined reference position, a black image to be displayed by a pixel at one end or two ends of multiple first areas viewable to the first eye and not viewable to the second eye and by a pixel at one end or two ends of multiple second areas viewable to the second eye and not viewable to the first eye in a parallax direction.

FIG. 1

EP 4 040 218 A1

**Description**

**FIELD**

The present disclosure relates to a three-dimensional display device, a controller, a three-dimensional display method, a three-dimensional display system, and a movable object.

**BACKGROUND**

A known technique is described in, for example, Patent Literature 1.

**CITATION LIST**

**PATENT LITERATURE**

Patent Literature 1: Japanese Unexamined Patent Application Publication No. 7-287196

**BRIEF SUMMARY**

A three-dimensional display device according to one aspect of the present disclosure includes a display panel, an optical panel, and a controller. The display panel includes a plurality of display elements. The plurality of display elements display a parallax image. The optical panel defines a traveling direction of image light emitted from each of the plurality of display elements. The controller controls the parallax image based on a position of a first eye of a user and a position of a second eye of the user. The parallax image includes a first image including a plurality of first pixels corresponding to the first eye of the user, and a second image including a plurality of second pixels corresponding to the second eye of the user. The parallax image includes the plurality of first pixels and the plurality of second pixels being repeatedly arranged alternately in a parallax direction. The controller causes a predetermined proportion of the plurality of first pixels and the plurality of second pixels to display a black image. The predetermined proportion is determined to cause, for the first eye and the second eye of the user at a predetermined reference position, a black image to be displayed by a pixel at one end or two ends of a plurality of first areas viewable to the first eye of the user and not viewable to the second eye in the parallax direction and by a pixel at one end or two ends of a plurality of second areas viewable to the second eye and not viewable to the first eye in the parallax direction.

A controller according to another aspect of the present disclosure is a controller for performing operations including causing a composite image including a first image and a second image having parallax with the first image to be displayed in an active area including a plurality of subpixels based on a position of a first eye of a user and a position of a second eye of the user different from the first eye. The controller causes a predetermined proportion of the plurality of subpixels to display a black image. The plurality of subpixels in the active area include a plurality of first subpixels to emit image light to reach the position of the first eye and not to reach the position of the second eye. The plurality of subpixels in the active area include a plurality of second subpixels to emit image light to reach the position of the second eye and not to reach the position of the first eye. The predetermined proportion is determined to cause, for the first eye and the second eye of the user at a predetermined reference position, a black image to be displayed at one end or two ends of the plurality of first subpixels in a parallax direction and at one end or two ends of the plurality of second subpixels in the parallax direction.

A three-dimensional display method according to another aspect of the present disclosure is implementable by a three-dimensional display device including a display panel, an optical element, an obtainer, and a controller. The display panel includes an active area including a plurality of subpixels to display a composite image including a first image and a second image having parallax with the first image. The optical element defines a traveling direction of image light emitted from the active area. The obtainer obtains a position of a first eye of a user and a position of a second eye of the user different from the first eye. The controller causes the composite image to be displayed in the active area based on the position of the first eye and the position of the second eye. The method includes determining, with the controller, based on the position of the first eye and the position of the second eye different from the first eye, a plurality of first subpixels in the active area to emit image light to reach the position of the first eye and not to reach the position of the second eye. The method includes determining, with the controller, based on the position of the first eye and the position of the second eye different from the first eye, a plurality of second subpixels in the active area to emit image light to reach the position of the second eye and not to reach the position of the first eye. The method includes causing, with the controller, a black image to be displayed at one end or two ends of the plurality of first subpixels in a parallax direction and at one end or two ends of the plurality of second subpixels in the parallax direction.

A three-dimensional display system according to another aspect of the present disclosure includes a detector, a display panel, an optical element, an obtainer, and a controller. The detector detects a position of a first eye of a user and a position of a second eye of the user different from the first eye. The display panel includes an active area to display a composite image including a first image and a second image having parallax with the first image. The optical element defines a traveling direction of image light emitted from the active area. The obtainer obtains the position of the first eye of the user and the position of the second eye different from the first eye. The controller causes the composite image to be displayed in the active area based on the position of the first eye and the position of the second eye. The active area includes a plurality of subpixels. The controller causes a predetermined proportion of the plurality of subpixels to display a black image. The plurality of subpixels in the active area include a plurality of first subpixels to emit image light to reach the position of the first eye and not to reach the position of the second eye. The plurality of subpixels in the active area include a plurality of second subpixels to emit image light to reach the position of the second eye and not to reach the position of the first eye. The predetermined proportion is determined to cause, for the first eye and the second eye of the user at a predetermined reference position, a black image to be displayed at one end or two ends of the plurality of first subpixels in a parallax direction and at one end or two ends of the plurality of second subpixels in the parallax direction.

A movable object according to another aspect of the present disclosure includes a three-dimensional display device. The three-dimensional display device includes a display panel, an optical element, an obtainer, and a controller. The display panel includes an active area to display a composite image including a first image and a second image having parallax with the first image. The optical element defines a traveling direction of image light emitted from the active area. The obtainer obtains a position of a first eye of a user and a position of a second eye of the user different from the first eye. The controller causes the composite image to be displayed in the active area based on the position of the first eye and the position of the second eye. The active area includes a plurality of subpixels. The controller causes a predetermined proportion of the plurality of subpixels to display a black image. The plurality of subpixels in the active area include a plurality of first subpixels to emit image light to reach the position of the first eye and not to reach the position of the second eye. The plurality of subpixels in the active area include a plurality of second subpixels to emit image light to reach the position of the second eye and not to reach the position of the first eye. The predetermined proportion is determined to cause, for the first eye and the second eye of the user at a predetermined reference position, a black image to be displayed at one end or two ends of the plurality of first subpixels in a parallax direction and at one end or two ends of the plurality of second subpixels in the parallax direction.

## BRIEF DESCRIPTION OF DRAWINGS

The objects, features, and advantages of the present disclosure will become more apparent from the following detailed description and the drawings.

FIG. 1 is a schematic diagram of a three-dimensional (3D) display system according to an embodiment viewed in a vertical direction.
FIG. 2 is a diagram of an example display panel shown in FIG. 1 viewed in a depth direction.

FIG. 3 is a diagram of an example parallax barrier shown in FIG. 1 viewed in the depth direction.
FIG. 4 is a diagram of an example active area on the display panel shown in FIG. 1 viewable to a left eye.
FIG. 5 is a diagram of an example active area on the display panel shown in FIG. 1 viewable to a right eye.
FIG. 6 is a diagram describing example types of images to be displayed by multiple subpixels in an active area on a display panel with the structure that forms the basis of one or more embodiments of the present disclosure in the state shown in FIGs. 4 and 5.
FIG. 7 is a diagram describing example types of images to be displayed by multiple subpixels in an active area on a display panel in a 3D display device according to one embodiment of the present disclosure in the state shown in FIGs. 4 and 5.
FIG. 8 is a diagram describing an example of switching between multiple subpixels when a parallax barrier appears to have moved to the right from the display panel in the state in FIG. 7.
FIG. 9 is a diagram describing the types of images to be displayed by multiple subpixels on a display panel in a 3D display device with an aperture ratio of 37.5% with the structure that forms the basis of one or more embodiments of the present disclosure.
FIG. 10 is a diagram describing the types of images to be displayed by multiple subpixels on a display panel at a reference position in a 3D display device according to one embodiment.
FIG. 11 is a diagram describing the types of images to be displayed by multiple subpixels on a display panel at a reference position in a 3D display device according to one embodiment.
FIG. 12 is a flowchart of a method for displaying a 3D image with a 3D display device according to one embodiment.
FIG. 13 is a diagram describing example types of images to be displayed by multiple subpixels on the display panel in accordance with the eye positions of a user.
FIG. 14 is a diagram describing example types of images to be displayed by multiple subpixels on the display panel in accordance with the eye positions of a user.
FIG. 15 is a graph showing the crosstalk ratio versus the barrier aperture ratio.
FIG. 16 is a diagram of an example head-up display (HUD) incorporating a 3D display system according to one embodiment.
FIG. 17 is a diagram of an example movable object incorporating the HUD shown in FIG. 12.

## DETAILED DESCRIPTION

As a head-up display (HUD) with the structure that forms the basis of a three-dimensional (3D) display device according to one or more embodiments of the present disclosure, a known 3D display device projects parallax images with parallax between them for the right eye and the left eye of a user to provide a stereoscopic view.

In the 3D display device, a part of an image intended for the left eye may be projected to be viewable to the right eye, and a part of an image intended for the right eye may be projected to be viewable to the left eye. This causes crosstalk. An image with crosstalk can be less easily viewable. Thus, crosstalk is to be minimized.

In response to the above, one or more aspects of the present disclosure are directed to a 3D display device, a controller, a 3D display method, a 3D display system, and a movable obj ect that can reduce crosstalk.

One or more embodiments of the present disclosure will now be described with reference to the drawings. The drawings used herein are schematic and are not drawn to scale relative to the actual size of each component.

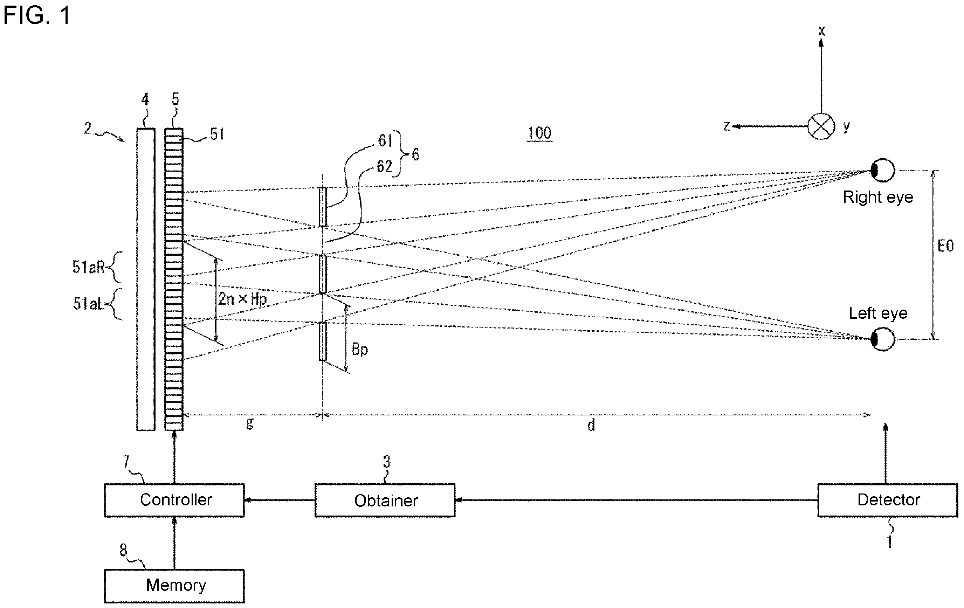

As shown in FIG. 1, a three-dimensional (3D) display system 100 according to embodiments of the present disclosure includes a detector 1 and a 3D display device 2.

The detector 1 detects the position of a first eye of the user. The detector 1 outputs information about the detected position of the first eye to the 3D display device 2. The detector 1 detects the position of a second eye of the user. The detector 1 outputs information about the detected position of the second eye to the 3D display device 2. Although the first eye is the left eye and the second eye is the right eye in the embodiments, the first eye may be the right eye and the second eye may be the left eye.

The detector 1 may include, for example, a camera. The detector 1 may capture an image of the face of the user with the camera. The detector 1 may use the image including the user's face captured with the camera to detect the positions of the left eye and the right eye. The detector 1 may use an image captured with a single camera to detect the positions of the left eye and the right eye as coordinates in a 3D space. The detector 1 may use images captured with two or more cameras to detect the positions of the left eye and the right eye as coordinates in a 3D space.

The detector 1 may not include a camera and may be connected to an external camera. The detector 1 may include an input terminal for receiving signals from the external camera. The external camera may be connected to the input terminal directly. The external camera may be connected to the input terminal indirectly through a shared network. The detector 1 that does not include a camera may include an input terminal for receiving image signals from a camera. The detector 1 including no camera may use the image signals received through the input terminal to detect the positions of the left eye and the right eye.

The detector 1 may include, for example, a sensor. The sensor may be an ultrasonic sensor or an optical sensor. The detector 1 may detect the position of the user's head with the sensor, and the positions of the left eye and the right eye based on the position of the head. The detector 1 may use one sensor or two or more sensors to detect the positions of the left eye and the right eye as coordinates in a 3D space.

The 3D display system 100 may not include the detector 1. When the 3D display system 100 does not include the detector 1, the 3D display device 2 may include an input terminal for receiving signals from an external detector connected to the input terminal. The external detector may use electrical signals or optical signals as transmission signals transmitted to the input terminal. The external detector may be connected to the input terminal indirectly through a shared network. The 3D display device 2 may receive positional coordinates indicating the positions of the left eye and the right eye input from the external detector.

The 3D display device 2 may include an obtainer 3, an illuminator 4, a display panel 5, a parallax barrier 6 as an optical element or an optical panel, a controller 7, and a memory 8.

The obtainer 3 can receive input information about the positions of the left eye and the right eye detected by the detector 1. The obtainer 3 can input the information about the positions of the left eye and the right eye into the controller 7.

The illuminator 4 illuminates the display panel 5 with planar illumination light. The illuminator 4 may include a light source, a light guide plate, a diffuser plate, and a diffuser sheet. The illuminator 4 emits, from its light source, illumination light that then spreads uniformly for illuminating the surface of the display panel 5. The illuminator 4 can emit illumination light to be uniform through, for example, the light guide plate, the diffuser plate, and the diffuser sheet. The illuminator 4 may emit the uniform light toward the display panel 5.

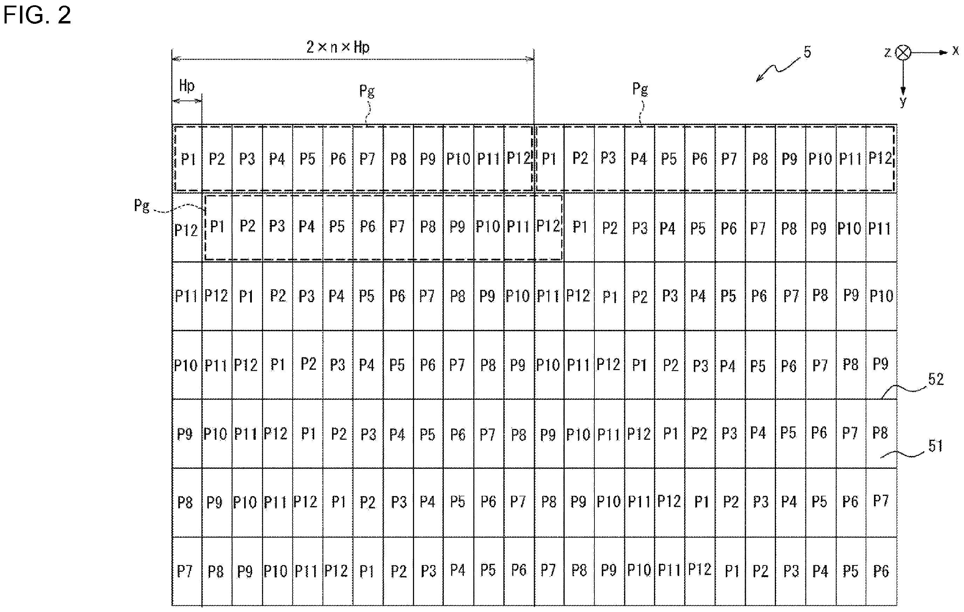

As shown in FIG. 2, the display panel 5 includes a planar active area 51. The active area 51 includes multiple divisional areas. The active area 51 is operable to display a composite image. The composite image includes a first image and a second image. The second image has parallax with the first image. The first image can be a left eye image. The left eye image is to be viewed with the user's left eye. The second image can be a right eye image. The right eye image is to be viewed with the user's right eye. The first image may be a right eye image. The second image may be a left eye image.

The divisional areas are in a lattice-like black matrix 52 defined in a first direction and in a second direction orthogonal to the first direction. The second direction intersects with the first direction. The second direction can be substantially orthogonal to the first direction. The second direction can be orthogonal to the first direction. The first direction and the second direction define a plane. The direction orthogonal to the first direction and the second direction is referred to as a third direction. The first direction may be referred to as a horizontal direction. The horizontal direction is the direction corresponding to the parallax (parallax direction) of the user. The second direction may be referred to as a vertical direction. The third direction may be referred to as a depth direction. However, the first, second, and third directions are not limited to the directions referred to above. In the drawings, the first direction refers to x-direction, the second direction to y-direction, and the third direction to z-direction.

Each divisional area corresponds to a subpixel. A single subpixel is a single display element. Each divisional area emits image light. The composite image includes combined image light. Thus, the active area 51 includes multiple subpixels arranged in a lattice in the horizontal direction and the vertical direction. Each first subpixel has one of the colors red (R), green (G), and blue (B). One pixel may be a set of three subpixels with R, G, and B. One pixel may include four or any other number of subpixels, instead of three subpixels. One pixel may include subpixels with a combination of colors different from R, G, and B. For example, multiple subpixels included in one pixel may be arranged in the horizontal direction. Multiple subpixels having the same color may be arranged, for example, in the vertical direction.

The display panel 5 may be a transmissive display panel. The transmissive display panel may include a liquid crystal panel. The display panel 5 is not limited to a transmissive liquid crystal panel but may be a self-luminous display panel. Examples of the self-luminous display panel include an organic electroluminescent (EL) display and an inorganic EL. The display panel 5 may be another display panel. For the display panel 5 being a self-luminous display panel, the 3D display device 2 may not include the illuminator 4.

As described above, the multiple subpixels arranged in the active area 51 form multiple subpixel groups Pg. The subpixel groups Pg are arranged repeatedly in the horizontal direction. The subpixel groups Pg are arranged repeatedly in the vertical direction at positions shifted by one subpixel or by a predetermined number of multiple subpixels from the corresponding subpixel groups Pg in the horizontal direction. The subpixel groups Pg are adjacent to one another. The subpixel groups Pg each include multiple subpixels in predetermined rows and columns. In the example shown in FIG. 2, the subpixel groups Pg each include $(2 \times n \times b)$ subpixels P1 to PN ($N = 2 \times n \times b$), which are consecutively arranged in b row(s) in the vertical direction and in $(2 \times n)$ columns in the horizontal direction. In the example shown in FIG. 2, n is 6, and b is 1. The active area 51 includes the subpixel groups Pg each including 12 subpixels P1 to P12 consecutively arranged in one row in the vertical direction and in 12 columns in the horizontal direction. In the example shown in FIG. 2, some of the subpixel groups Pg are denoted by reference signs.

Each subpixel group Pg is the smallest unit controllable by the controller 7 to display an image. The subpixels P1 to PN ($N = 2 \times n \times b$) included in each subpixel group Pg with the same identification information are controlled by the controller 7 at the same time. Being controlled at the same time includes being controlled simultaneously, substantially simultaneously, based on the same clock, and in the same frame. For example, the controller 7 can switch the image to be displayed by the subpixels P1 from the left eye image to the right eye image at the same time in all the subpixel groups Pg.

As shown in FIG. 1, the parallax barrier 6 is planar along the active area 51. The parallax barrier 6 is separate from the active area 51 by a gap g of a predetermined distance. The parallax barrier 6 may be located opposite to the illuminator 4 from the display panel 5. The parallax barrier 6 may be located between the display panel 5 and the illuminator 4.

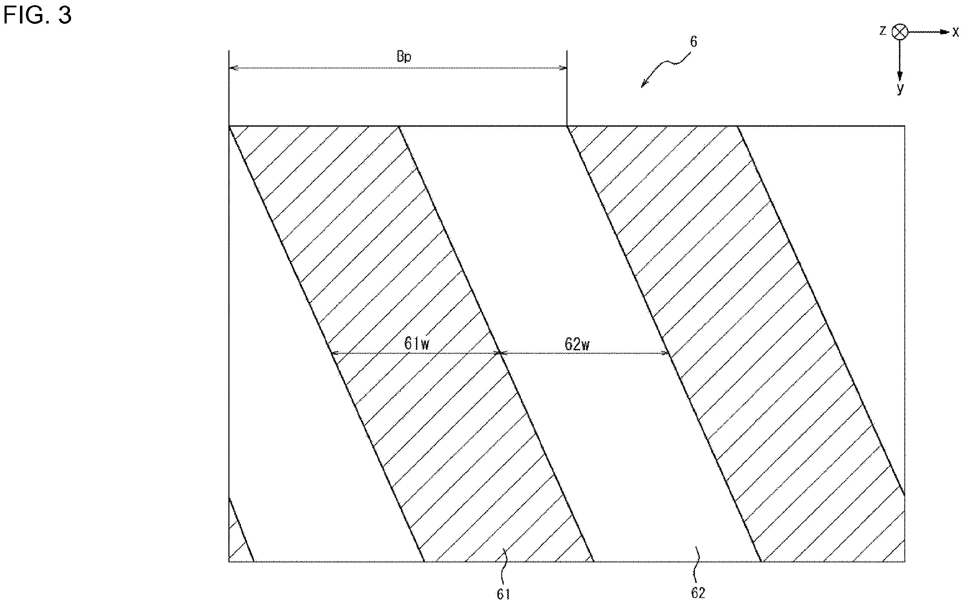

The parallax barrier 6 defines the traveling direction of image light emitted from each of the multiple subpixels. The traveling direction is the direction in which image light travels. The parallax barrier 6 includes multiple less-transmissive portions 61 and multiple transmissive portions 62. The less-transmissive portions 61 form a less-transmissive portion. As shown in FIG. 3, the transmissive portions 62 are strip areas each elongated in a fourth direction in the plane. The fourth direction is at a predetermined angle other than zero with the vertical direction.

As shown in FIG. 1, the parallax barrier 6 defines the traveling direction of image light emitted from each of the subpixels arranged in the active area 51 to define parts of the active area 51 viewable to the eyes of the user. Areas in the active area 51 emitting image light that reaches the positions of the user's eyes are hereafter referred to as viewable areas 51a. Areas in the active area 51 emitting image light that reaches the position of the user's left eye are referred to as left viewable areas 51aL. Areas in the active area 51 emitting image light that reaches the position of the user's right eye are referred to as right viewable areas 51aR. The multiple left viewable areas 51aL or the multiple right viewable areas 51aR are first areas. The multiple left viewable areas 51aL or the multiple right viewable areas 51aR that are not the first areas are second areas. In the present embodiment, the left viewable areas 51aL are the first areas, and the right viewable areas 51aR are the second areas.

More specifically, as shown in FIG. 3, the parallax barrier 6 includes multiple less-transmissive portions 61 for reducing image light. The less-transmissive portions 61 define transmissive portions 62 between adjacent less-transmissive portions 61. The less-transmissive portions 61 and the transmissive portions 62 are arranged alternately in the horizontal direction. The second width 62w of each transmissive portion 62 in the horizontal direction can be smaller than the first width 61w of each less-transmissive portion 61 in the horizontal direction. The ratio of the second width 62w to the barrier pitch Bp indicates the aperture ratio of the parallax barrier 6. The parallax barrier 6 can have an aperture ratio less than 50%. The aperture ratio of the parallax barrier 6 is equal to the percentage of an area in the active area 51 viewable to the left eye and the percentage of an area in the active area 51 viewable to the right eye.

The multiple transmissive portions 62 are parts of the parallax barrier 6 to transmit light incident on the parallax barrier 6. The transmissive portions 62 have a higher light transmittance than the less-transmissive portions 61. The less-transmissive portions 61 have a lower light transmittance than the transmissive portions 62. The transmissive portions 62 may transmit light with a transmittance of a first predetermined value or greater. The first predetermined value may be, for example, about 100% or a value less than 100%. The first predetermined value can be a value less than 100%, such as 80% or 50%, when the image light emitted from the active areas 51 falls within the range of good visibility. The less-transmissive portions 61 are parts of the parallax barrier 6 to substantially block light incident on the parallax barrier 6. The less-transmissive portions 61 prevent an image displayed in the active area 51 on the display panel 5 from being viewable to the user's eyes. The less-transmissive portions 61 may transmit light with a transmittance of a second predetermined value or less. The second predetermined value may be, for example, substantially 0% or a greater value close to 0%, such as 0.5%, 1%, or 3%. The first predetermined value can be several times, or for example, 10 times, 100 times, or 1000 times greater than the second predetermined value. The first predetermined value can be an appropriate known value selected from the range of values that can create contrast with light transmitted through the less-transmissive portions 61.

The transmissive portions 62 and the less-transmissive portions 61 extend in a predetermined direction along the active area 51. The transmissive portions 62 and the less-transmissive portions 61 can be arranged alternately in a direction orthogonal to the predetermined direction. The transmissive portions 62 define the traveling direction of image light emitted from each of the multiple subpixels.

As shown in FIG. 1, the barrier pitch Bp as an interval at which the transmissive portions 62 are arranged in the horizontal direction, and the gap g between the active area 51 and the parallax barrier 6 are determined to satisfy Formula 1 and Formula 2 written below using an optimum viewing distance d and a standard distance E0.

$$E0{:}d = (n \times Hp){:}g \qquad (1)$$

$$d{:}Bp = (d + g){:}(2 \times n \times Hp) \qquad (2)$$

The optimum viewing distance d is the distance between the user's right eye or left eye and the parallax barrier 6. At the optimum viewing distance d, the horizontal length of each viewable area 51a viewable to each eye is equivalent to n subpixels when the aperture ratio is 50%. The direction of a straight line passing through the right eye and the left eye (interocular direction) corresponds to the horizontal direction. The interocular direction can be different in the physical space. The standard distance E0 is the standard interocular distance E of the user. The standard distance E0 may be, for example, 61.1 to 64.4 mm, as calculated through studies conducted by the National Institute of Advanced Industrial Science and Technology. Hp is the horizontal length of each subpixel as shown in FIG. 2.

The parallax barrier 6 may be a film or a plate with a transmittance less than the second predetermined value. In this case, the less-transmissive portions 61 are parts of the film or plate. The transmissive portions 62 are slits in the film or plate. The film may be formed from resin or another material. The plate may be formed from resin, metal, or another material. The parallax barrier 6 may be formed from a material other than a film or a plate. The parallax barrier 6 may include a base formed from a light-reducing material or a material containing an additive with light-reducing properties.

The parallax barrier 6 may be, for example, a liquid crystal shutter. The liquid crystal shutter can control the transmittance of light in accordance with a voltage applied. The liquid crystal shutter may include multiple pixels and control the transmittance of light for each pixel. The liquid crystal shutter can form an area with a high light transmittance or an area with a low light transmittance in an intended shape. For the parallax barrier 6 being a liquid crystal shutter, the transmissive portions 62 may have a transmittance of the first predetermined value or greater. For the parallax barrier 6 being a liquid crystal shutter, the less-transmissive portions 61 may have a transmittance of the second predetermined value or less.

In this structure, the parallax barrier 6 transmits image light from selected subpixels in the active area 51 through the transmissive portions 62 to reach the user's right eye. The parallax barrier 6 transmits image light from the other subpixels through the transmissive portions 62 to reach the user's left eye.

The controller 7 may be connected to each of the components of the 3D display system 100 to control these components. The components controlled by the controller 7 include the detector 1 and the display panel 5. The controller 7 may be, for example, a processor. The controller 7 may include one or more processors. The processors may include a general-purpose processor that reads a specific program and performs a specific function, and a processor dedicated to specific processing. The dedicated processor may include an application-specific integrated circuit (ASIC). The processor may include a programmable logic device (PLD). The PLD may include a field-programmable gate array (FPGA). The controller 7 may be either a system on a chip (SoC) or a system in a package (SiP) in which one or more processors cooperate with other components. The controller 7 may include a storage to store various items of information or programs to operate each component of the 3D display system 100. The storage may be, for example, a semiconductor memory. The storage may serve as a work memory for the controller 7.

The memory 8 may include any storage such as a random-access memory (RAM) or a read-only memory (ROM). The memory 8 may store various items of information such as positional information about the left eye and the right eye obtained by the obtainer 3, and image information displayed by the display panel 5 as controlled by the controller 7.

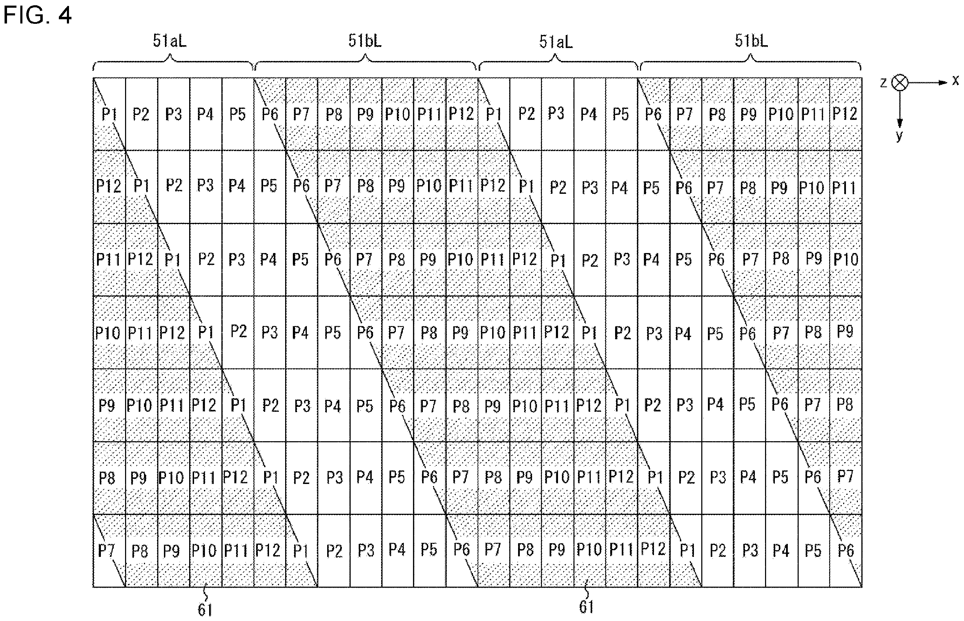

The controller 7 controls the parallax image displayed by the display panel 5 based on the positions of the user's eyes. An example of control performed by the controller 7 over the display panel 5 will now be described with reference to FIGs. 4 to 8.

FIG. 4 is a diagram of the active area 51 on the display panel 5 viewable to the left eye of the user when the display panel 5, the parallax barrier 6, and the left and right eyes of the user are in a predetermined positional relationship. Image light from areas blocked by multiple less-transmissive portions 61 in the shaded portions of the active area 51 is not viewable to the left eye of the user. The left viewable areas 51aL are multiple areas defined in the active area 51 viewable to the left eye of the user. The image light emitted from the subpixels in the left viewable areas 51aL can pass through the transmissive portions 62 of the parallax barrier 6 and reach the left eye of the user. Left unviewable areas 51bL are multiple areas defined in the active area 51 that are not viewable to the left eye of the user. The image light emitted from the subpixels in the left unviewable areas 51bL is blocked by the less-transmissive portions 61 of the parallax barrier 6.

In the state shown in FIG. 4, the left viewable areas 51aL include half of the subpixels P1, all of the subpixels P2 to P5, and half of the subpixels P6. The left unviewable areas 51bL include half of the subpixels P6, all of the subpixels P7 to P12, and half of the subpixels P1.

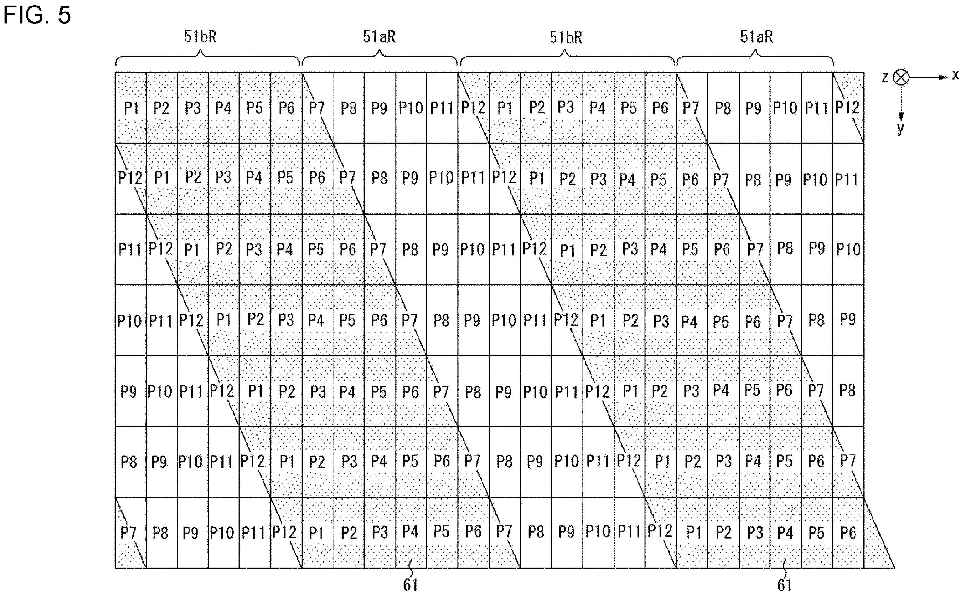

FIG. 5 is a diagram of the active area 51 on the display panel 5 viewable to the right eye of the user when the display panel 5, the parallax barrier 6, and the left and right eyes of the user are in the same predetermined positional relationship as in FIG. 4. Image light from areas blocked by multiple less-transmissive portions 61 in the shaded portions of the active area 51 is not viewable to the right eye of the user. The right viewable areas 51aR are multiple areas defined in the active area 51 viewable to the right eye of the user. The image light emitted from the subpixels in the right viewable areas 51aR can pass through the transmissive portions 62 of the parallax barrier 6 and reach the right eye of the user. Right unviewable areas 51bR are multiple areas defined in the active area 51 that are not viewable to the right eye of the user. The image light emitted from the subpixels in the right unviewable areas 51bR is blocked by the less-transmissive portions 61 of the parallax barrier 6.

In the state shown in FIG. 5, the right viewable areas 51aR include half of the subpixels P7, all of the subpixels P8 to P11, and half of the subpixels P12. The right unviewable areas 51bR include half of the subpixels P12, all of the subpixels P1 to P6, and half of the subpixels P7.

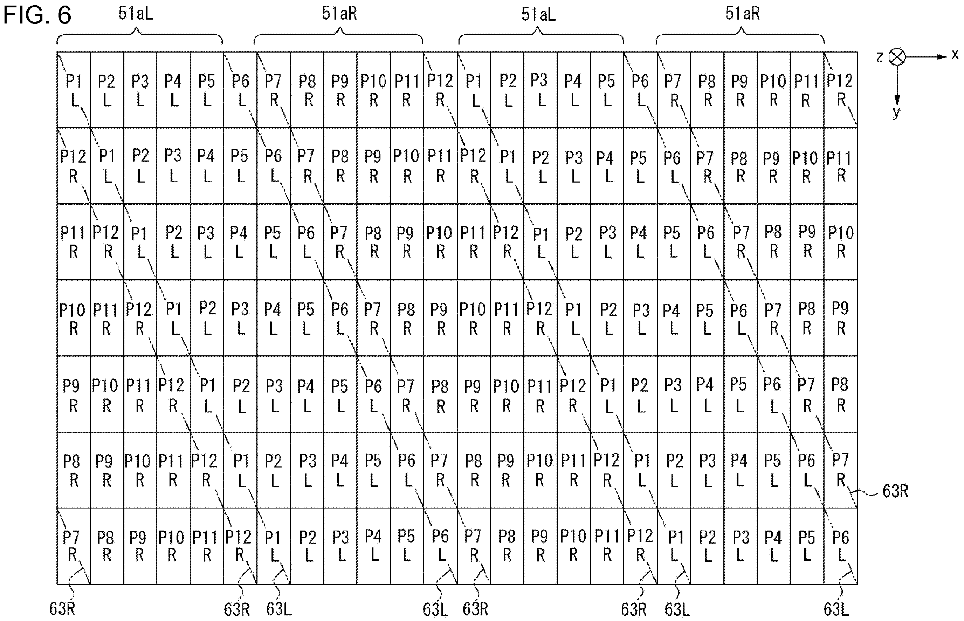

As shown in FIGs. 4 and 5, none of the subpixels P1 to P6 at least partially included in the left viewable areas 51aL are included in the right viewable areas 51aR. The subpixels P1 to P6 are arranged in the horizontal direction in the left viewable areas 51aL that are viewable to the left eye of the user and not viewable to the right eye. None of the subpixels P7 to P12 at least partially included in the right viewable areas 51aR are included in the left viewable areas 51aL. The subpixels P7 to P12 are arranged in the horizontal direction in the right viewable areas 51aR that are viewable to the right eye of the user and not viewable to the left eye. When the left eye image is displayed by the subpixels P1 to P6 and the right eye image is displayed by the subpixels P7 to P12 as shown in FIG. 6, the left eye views the left eye image, and the right eye views the right eye image. The right eye image and the left eye image have parallax between them and are included in a parallax image. FIG. 6 is a diagram describing a method for displaying the right eye image and the left eye image with the technique that forms the basis of the structure according to one or more embodiments of the present disclosure.

In FIG. 6, the double-dotted lines indicate boundaries 63L between the less-transmissive portions 61 and the transmissive portions 62 viewable to the left eye, and boundaries 63R between the less-transmissive portions 61 and the transmissive portions 62 viewable to the right eye. The boundaries 63L represent the positions of the edges of the less-transmissive portions 61 of the parallax barrier 6 viewable to the left eye, whereas the boundaries 63R represent the positions of the edges of the less-transmissive portions 61 viewable to the right eye. The subpixels L display the left eye image. The subpixels R display the right eye image. The subpixels P1 to P6 displaying the left eye image can be referred to as first subpixels or first pixels. The subpixels P7 to P12 displaying the right eye image can be referred to as second subpixels or second pixels. The first subpixels or pixels and the second subpixels or pixels may be interchanged. The first subpixels and the second subpixels are repeatedly arranged alternately.

For multiple left eye pixels and multiple right eye pixels arranged as shown in FIG. 6 in the positional relationship between the display panel 5, the parallax barrier 6, and the left and right eyes of the user shown in FIGs. 4 and 5, image light traveling linearly causes no crosstalk. However, the 3D display device 2 can have crosstalk in the above positional relationship. The inventors have noticed that scattering or diffraction of image light at the edges of the less-transmissive portions 61 of the parallax barrier 6 causes crosstalk. The controller 7 thus causes subpixels viewable to the left eye and not viewable to the right eye near edges in the depth direction to display a black image, instead of displaying the left eye image. The controller 7 causes subpixels viewable to the right eye and not viewable to the left eye near edges in the depth direction to display a black image, instead of displaying the right eye image.

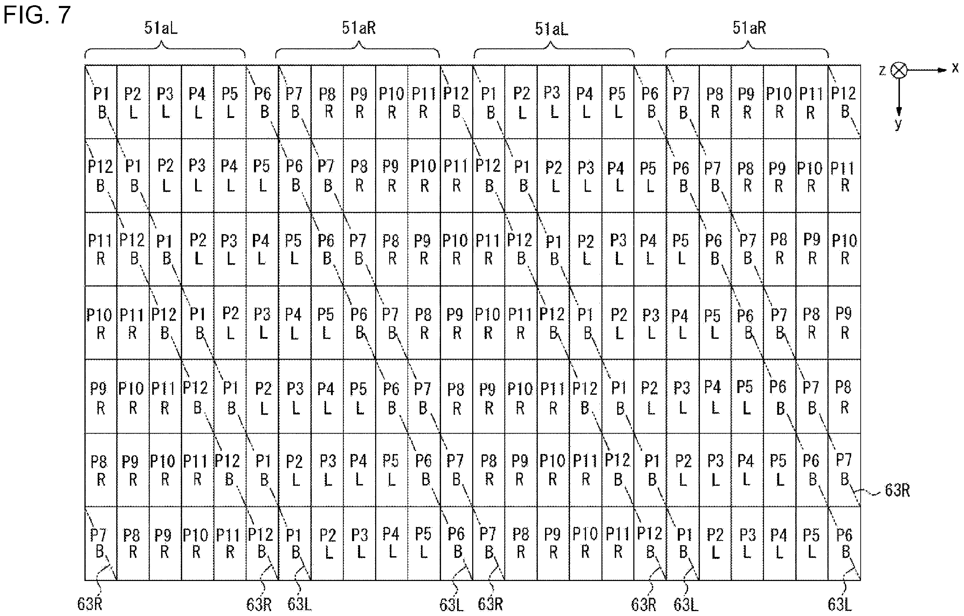

As shown in FIG. 7, for example, the controller 7 causes the subpixels P1 and P6 at both ends of the subpixels P1 to P6 to each display a black image. The controller 7 causes the subpixels P7 and P12 at both ends of the subpixels P7 to P12 to each display a black image. The controller 7 can thus reduce crosstalk substantially occurring between adjacent subpixel groups Pg. The controller 7 may also cause subpixels at one end of the multiple subpixels arranged in the parallax direction to each display a black image.

The ranges of left viewable areas 51aL and right viewable areas 51aR on the display panel 5 viewable to the left eye and the right eye of the user change when the positions of the user's eyes change with respect to the display panel 5 and the parallax barrier 6. The controller 7 thus determines subpixels to display the left eye image and subpixels to display the right eye image from the subpixels P1 to P12 in each subpixel group Pg in accordance with the positions of the user's eyes. The controller 7 switches the image to be displayed by the subpixels P1 to P12 between the left eye image, the right eye image, and the black image in response to changes in the positions of the user's eyes.

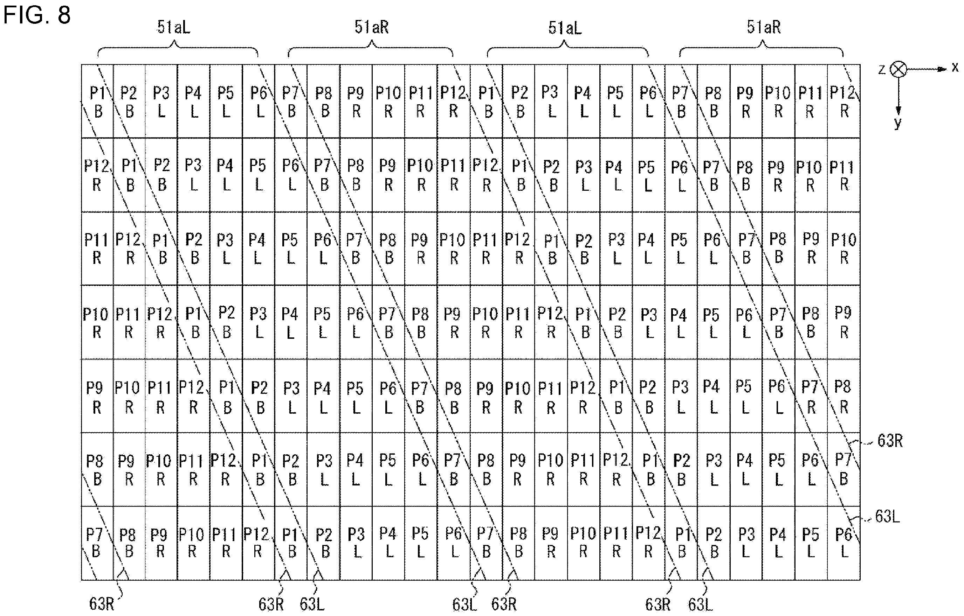

When, for example, the left eye and the right eye of the user move to the left relative to the display panel 5, the parallax barrier 6 appears to move to the right. Thus, the boundaries 63L and 63R are located more rightward in FIG. 8 than in FIG. 7. When the boundaries 63L and 63R move to the right as shown in FIG. 8, the left viewable areas 51aL and the right viewable areas 51aR also move to the right. In FIG. 8, image light emitted from the subpixels P2 to P6 reaches the left eye position but does not reach the right eye position. The subpixels P2 to P6 may be multiple first subpixels. Image light emitted from the subpixels P8 to P12 reaches the right eye position but does not reach the left eye position. The subpixels P8 to P12 may be multiple second subpixels. The subpixels P1 and P7 are at least partially included in the left viewable areas 51aL and in the right viewable areas 51aR. Crosstalk can occur when the left eye image or the right eye image is displayed by the subpixels P1 and P7. The controller 7 thus causes the subpixels P1 and P7 to display a black image.

The controller 7 may cause a black image to be displayed by the subpixels P2 that largely overlap any of the boundaries 63L, selectively from the subpixels P2 and P6 at both ends of the subpixels P2 to P6 displaying the left eye image. The controller 7 may cause a black image to be displayed by the subpixels P8 that largely overlap any of the boundaries 63R, selectively from the subpixels P8 and P12 at both ends of the subpixels P8 to P12 displaying the right eye image. This switches the image displayed by the subpixels P2 from the left eye image in FIG. 7 to the black image in FIG. 8. The image displayed by the subpixels P6 switches from the black image to the left eye image. The image displayed by the subpixels P8 switches from the right eye image to the black image. The image displayed by the subpixels P12 switches from the black image to the right eye image.

When the positions of the left eye and the right eye of the user change further and the positions of the boundaries 63L and 63R change further, the controller 7 sequentially switches the image displayed by the subpixels P1 to P12 in accordance with such changes.

The structure according to the present embodiment can reduce crosstalk caused by scattering or diffraction of image light at the edges of the parallax barrier 6. This is achieved by displaying a black image on each of multiple subpixels at one end or both ends of the subpixels displaying the left eye image or the right eye image. These subpixels each displaying a black image include multiple subpixels at positions free of crosstalk unless scattering or diffraction of light occurs at multiple edges. The structure according to the embodiment of the present disclosure can reduce crosstalk that cannot be removed with the technique that forms the basis of one or more embodiments of the present disclosure.

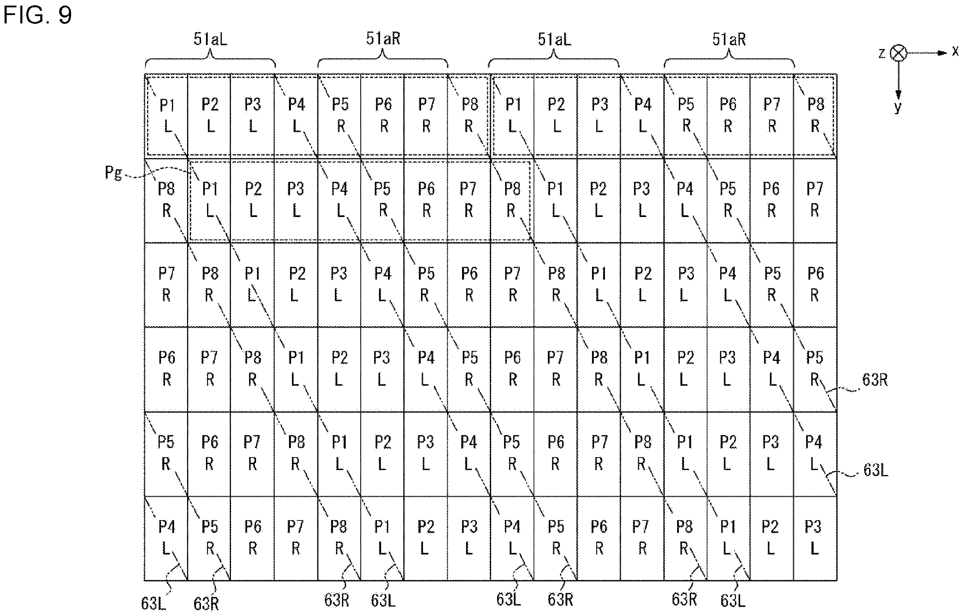

A 3D display device 2 according to another embodiment of the present disclosure will now be described with reference to FIGs. 9 to 14. In FIGs. 9 to 14, each subpixel group Pg in the active area 51 includes eight pixels. The subpixels P1 to P8 in each subpixel group Pg are arranged in the horizontal direction. In this example, n = 4 and b = 1. The subpixel groups Pg are arranged repeatedly in the horizontal direction. The subpixel groups Pg are arranged repeatedly in the vertical direction at positions shifted by one subpixel or by a predetermined number of multiple subpixels from the corresponding subpixel groups Pg in the horizontal direction. The boundaries 63L between the less-transmissive portions 61 and the transmissive portions 62 that are viewable to the left eye extend diagonally across the subpixels P1 and P4. The boundaries 63R between the less-transmissive portions 61 and the transmissive portions 62 that are viewable to the right eye extend diagonally across the subpixels P5 and P8. The boundaries 63L and 63R in FIGs. 9 to 14 indicate slits each corresponding to three subpixels. The parallax barrier 6 has an aperture ratio of 37.5%. FIGs. 9 to 14 are shown in the manner similar to that for FIGs. 6 and 7.

FIG. 9 shows the active area 51 at a reference position in the 3D display device with the structure that forms the basis of one or more embodiments of the present disclosure. The reference position is herein defined as the position at which crosstalk occurs in a minimum number of subpixels as shown in FIG. 9. At the reference position, the subpixels P1 to P4 overlap the left viewable areas 51aL that are viewable to the left eye of the user alone and do not overlap the right viewable areas 51aR. The subpixels P1 to P4 are the first subpixels emitting image light that reaches the left eye but does not reach the right eye. The subpixels P5 to P8 overlap the right viewable areas 51aR that are viewable to the right eye of the user alone and do not overlap the left viewable areas 51aL. The subpixels P5 to P8 are the second subpixels emitting image light that reaches the right eye but does not reach the left eye. The 3D display device shown in FIG. 9 has a little or no crosstalk in this state when no scattering or diffraction of light is to occur at edges of the parallax barrier 6.

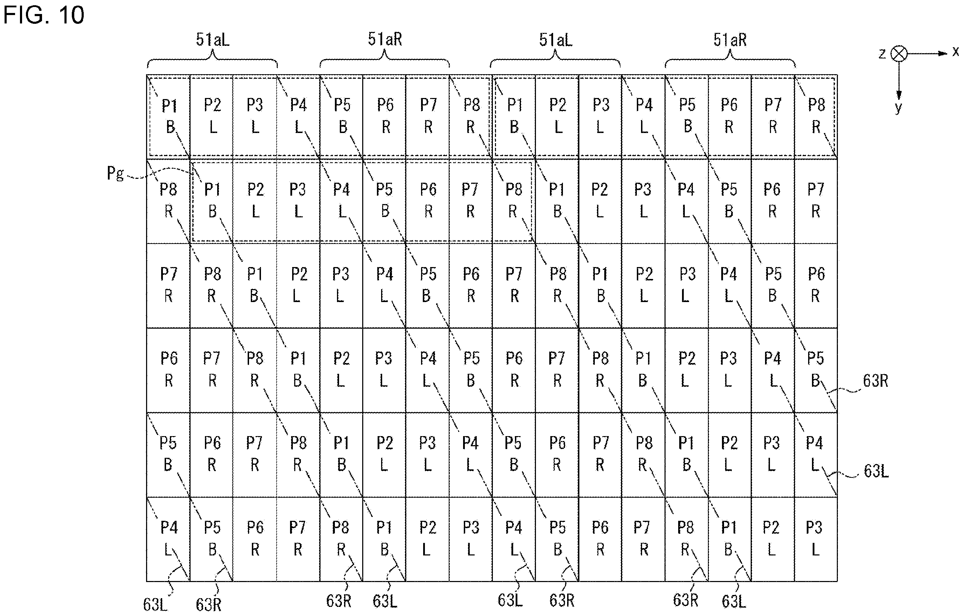

FIG. 10 shows the active area 51 at the reference position in the 3D display device 2 according to one embodiment of the present disclosure. In the 3D display device 2 shown in FIG. 10, the controller 7 causes the subpixels P1 at one end of the first subpixels P1 to P4 to each display a black image. The controller 7 causes the subpixels P5 at one end of the multiple second subpixels P5 to P8 to each display a black image. This causes a black image to be displayed by two of the eight subpixels included in each subpixel group Pg. The black image ratio, or specifically the percentage by which a black image is displayed, is 25%.

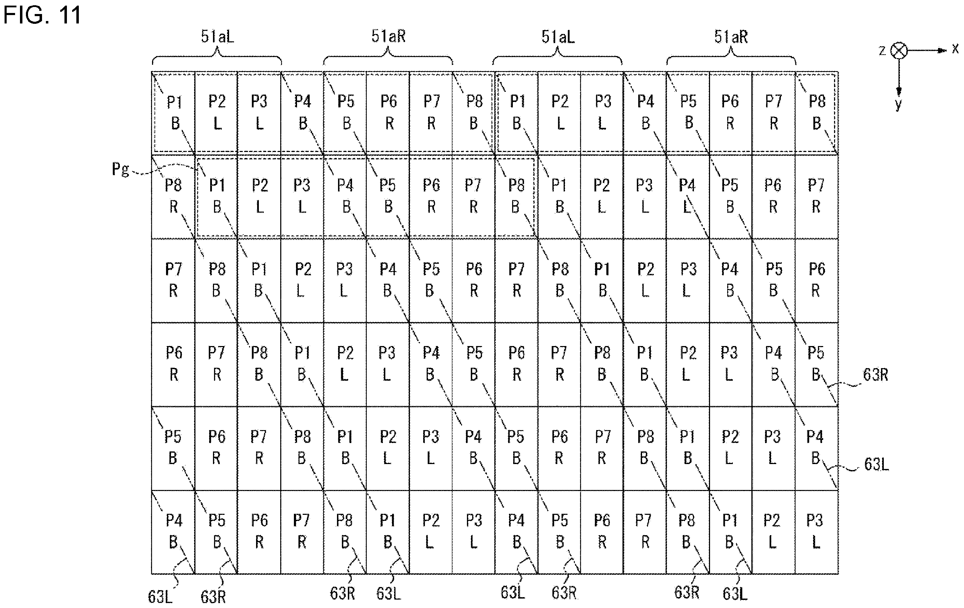

FIG. 11 shows the active area 51 at the reference position in the 3D display device 2 according to another embodiment of the present disclosure. In the 3D display device 2 shown in FIG. 11, the controller 7 causes the subpixels P1 and P4 at both ends of the first subpixels P1 to P4 to each display a black image. The controller 7 causes the subpixels P5 and P8 at both ends of the multiple second subpixels P5 to P8 to each display a black image. This causes a black image to be displayed by four subpixels P1, P4, P5, and P8 of the eight subpixels P1 to P8 included in each subpixel group Pg. The black image ratio, or specifically the percentage by which a black image is displayed, is 50%.

The 3D display device 2 with subpixels arranged in the active area 51 as shown in FIGs. 10 and 11 is expected to reduce crosstalk by displaying a black image on each subpixel around the edges of the parallax barrier 6. When the positional relationship between the display panel 5 and the user's right and left eyes changes, the 3D display device 2 sequentially switches the display image of the subpixels while maintaining the black image ratio determined at the reference position as described above.

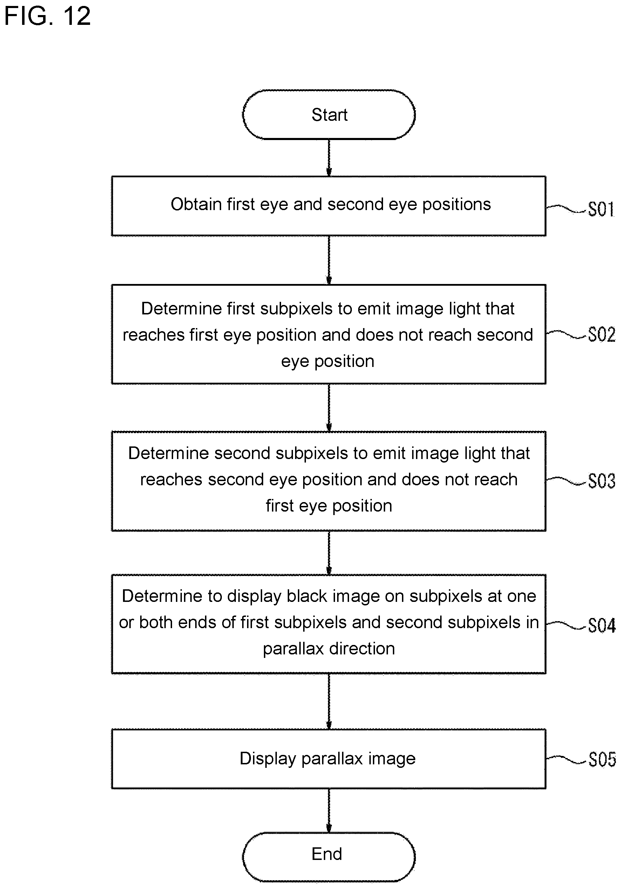

A 3D display method according to one or more embodiments of the present disclosure for the user with the left and right eyes at predetermined positions will now be described with reference to FIGs. 12 to 14. The process described below is performed by the controller 7 included in the 3D display device 2.

The controller 7 obtains information about the positions of the first eye and the second eye of the user from the detector 1 through the obtainer 3 (Step S01). In FIGs. 12 to 14, the left eye and the right eye of the user are at the positions shifted from the reference positions shown in FIGs. 10 and 11.

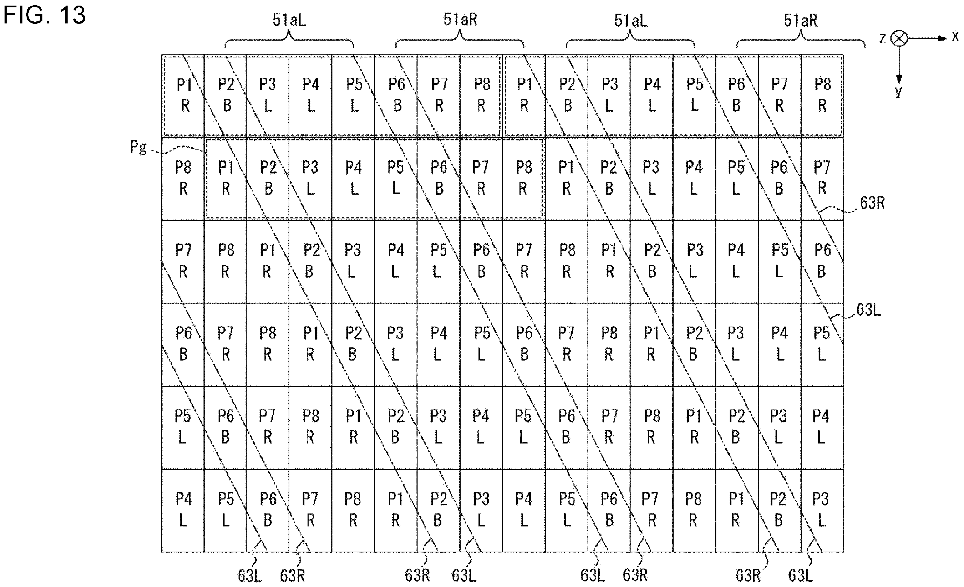

Based on the information about the positions of the first eye and the second eye obtained in step S01, the controller 7 determines multiple first subpixels to emit image light that reaches the position of the first eye and does not reach the position of the second eye (step S02). In the example shown in FIG. 13, the subpixels P3 to P5, which are at least partially included in the left viewable areas 51aL and are not included in the right viewable areas 51aR, are determined to be the first subpixels. The subpixels P2 and P6, which are partially included in the left viewable areas 51aL and are also partially included in the right viewable areas 51aR, are thus determined not to be the first subpixels.

Based on the information about the positions of the first eye and the second eye obtained in step S01, the controller 7 determines multiple second subpixels to emit image light that reaches the position of the second eye and does not reach the position of the first eye (step S03). In the example shown in FIG. 13, the subpixels P7, P8, and P1, which are at least partially included in the right viewable areas 51aR and are not included in the left viewable areas 51aL, are determined to be the second subpixels. The subpixels P2 and P6, which are partially included in the right viewable areas 51aR and are also partially included in the left viewable areas 51aL, are thus determined not to be the second subpixels. Step S03 may be performed before step S02. Step S03 may be performed in parallel with step S02.

The controller 7 determines to display a black image on each subpixel at one or both ends, in the parallax direction, of the first subpixels and the second subpixels determined in step S02 and step S03 (step S04). When, for example, the black image ratio of 25% is determined as shown in FIG. 10 at the reference position, the controller 7 controls the display pixels of the subpixels to achieve the black image ratio of 25%. The controller 7 controls a black image to be displayed by each of the subpixels P2 and P6 that are not included in the first subpixels and the second subpixels and are located between the first subpixels and the second subpixels in step S03 and step S04. The black image ratio of 25% can be achieved by the subpixels P2 and P6 each showing a black image. Thus, the controller 7 does not further change the image displayed by the first subpixels and the second subpixels to a black image.

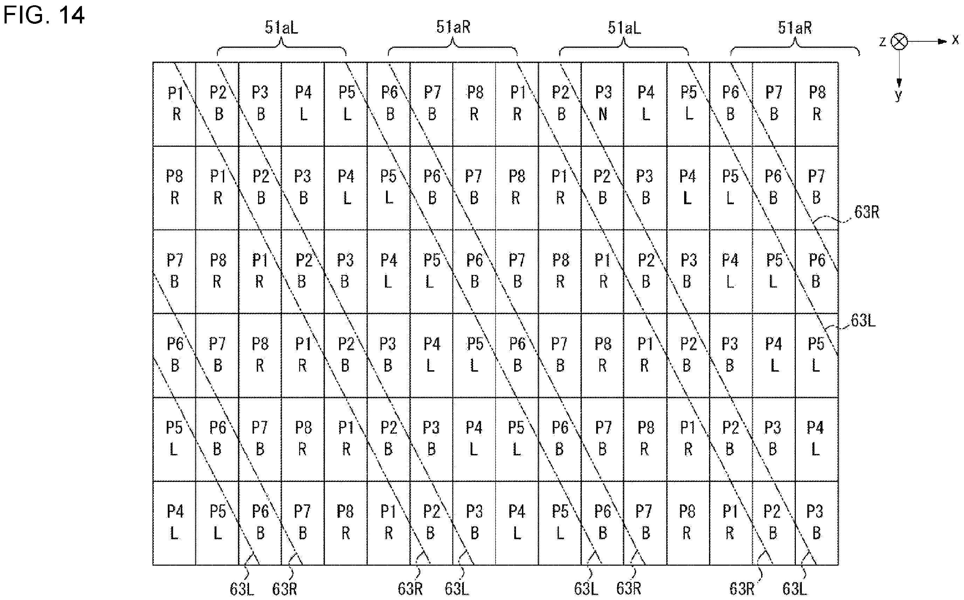

When the black image ratio of 50% is determined as shown in FIG. 11 at the reference position, the controller 7 controls the display pixels of the subpixels to achieve the black image ratio of 50%. In addition to the subpixels P2 and P6, the controller 7 determines two more subpixels to display a black image in each subpixel group Pg. As shown in FIG. 14, the controller 7 determines to display a black image on each of the subpixels P3 at one end in the parallax direction among the subpixels P3 to P5 determined to be the first subpixels. The controller 7 can compare the subpixels P3 and P5 at both ends and determine to display a black image on each of the subpixels P3 crossing with a larger overlap with any of the boundaries 63L. In other words, the controller 7 compares the subpixels P3 and P5 at both ends and determines to display a black image on each of the subpixels P3 having a larger overlap with the less-transmissive portions 61 when viewed with the left eye. The controller 7 determines to display a black image on each of the subpixels P7 at one end in the parallax direction among the subpixels P7, P8, and P1 determined to be the second subpixels, similarly to the first subpixels. Thus, the controller 7 determines to display a left eye image on the subpixels P4 and P5 that do not display a black image, among the first subpixels. The controller 7 determines to display a right eye image on the subpixels P8 and P1 that do not to display a black image, among the second subpixels.

The controller 7 displays a parallax image on each of the subpixels P1 to P8 as determined in step S04 (step S05). In the example shown in FIG. 14, the controller 7 thus causes the subpixels P4 and P5 to each display a left eye image. The controller 7 causes the subpixels P8 and P1 to each display a right eye image. The controller 7 causes the subpixels P2, P3, P6, and P7 to each display a black image.

The 3D display method described with reference to FIGs. 12 to 14 uses the parallax barrier 6 with an aperture ratio of 37.5%. Of the multiple subpixel groups Pg each including eight subpixels, three or two subpixels are viewable to each of the left eye and the right eye at a time. When the positions of the left eye and the right eye of the user change, the black image ratio of the parallax barrier 51 is maintained at 25% in the example shown in FIG. 13 and 50% in the example shown in FIG. 14. With the black image ratio being maintained at the fixed proportion, the user can continue to view the image naturally without any changes in the brightness as the eye positions change.

In the example process in step S04 with the above display method described with reference to FIG. 14, the controller 7 determines to display a black image on each of the subpixels P3 at one end in the parallax direction among the subpixels P3 to P5 determined to be the first subpixels. The controller 7 determines to display a black image on each of the subpixels P7 at one end in the parallax direction among the subpixels P7, P8, and P1 determined to be the second subpixels. The controller 7 may cause the subpixels P3, P5, P7, and P1 at both ends of the first subpixels and the second subpixels to each display a black image. In this case, the subpixels P4 alone display a left eye image, and the subpixels P8 alone display a right eye image. The subpixels P3, P5, P7, and P1 at both ends each displaying a black image can reduce crosstalk further.

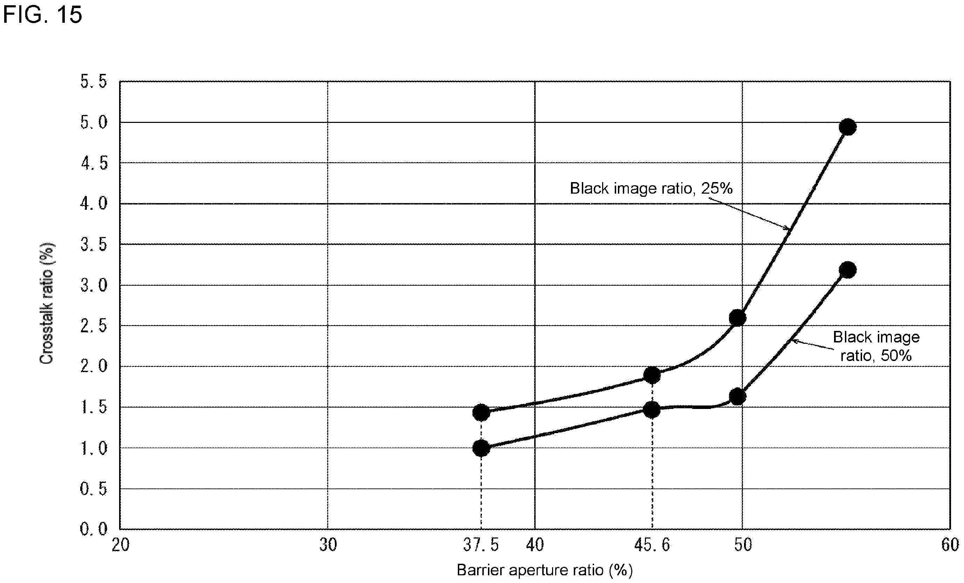

The inventors have measured the crosstalk ratio while varying the barrier aperture ratio in the 3D display device 2. The 3D display device 2 has the subpixel groups Pg each including eight subpixels including two or three subpixels to display each of a left eye image and a right eye image. When two subpixels display a left eye image and two subpixels display a right eye image, the black image ratio is 50%. When three subpixels display a left eye image and three subpixels display a right eye image, the black image ratio is 25%. FIG. 15 is a graph showing the crosstalk ratio versus the barrier aperture ratio for the black image ratios of 25% and 50%. For the black image ratio of 50% and the barrier aperture ratio of less than 45.6%, the crosstalk ratio is reduced to about 1.5%. For the black image ratio of 25% or greater and the barrier aperture ratio of 37.5%, the crosstalk ratio is 1.5% or less. For the black image ratio of 50% and the barrier aperture ratio of 37.5%, in particular, the crosstalk ratio is as low as about 1%.

To reduce crosstalk, the black image ratio is to be higher, and the barrier aperture ratio is to be lower. The results reveal that the crosstalk ratio can be reduced to 1.5% or less with the barrier aperture ratio of 37.5% or less and the black image ratio of 25% or greater, or with the barrier aperture ratio of 45.6% or less and the black image ratio of 50% or greater.

Although the above embodiments are described as typical examples, various modifications and substitutions to the embodiments are apparent to those skilled in the art without departing from the spirit and scope of the present disclosure. Thus, the above embodiments should not be construed to be restrictive, but may be variously modified or altered within the scope of the present disclosure. For example, multiple structural blocks described in the above embodiments or examples may be combined into a structural block, or each structural block may be divided. The embodiments of the present disclosure can also be implemented as a method or a program implementable by a processor included in the device, or as a storage medium storing the program. These method, program, and storage medium also fall within the scope of the present disclosure.

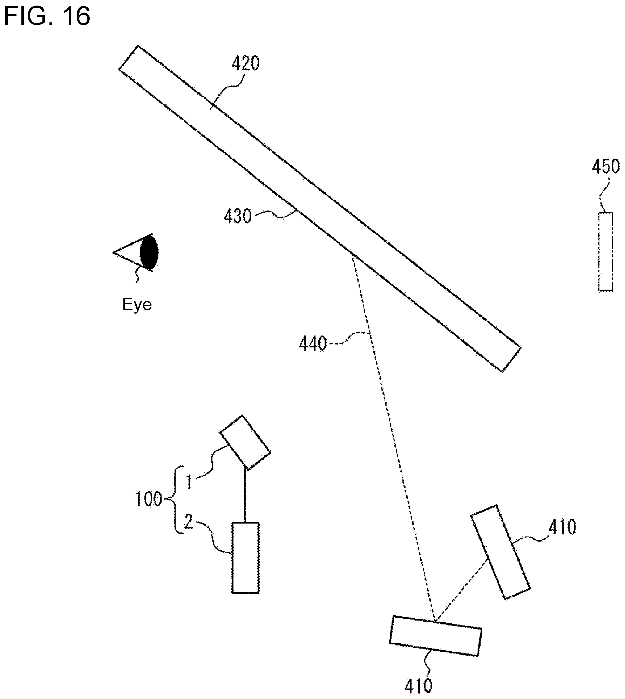

As shown in FIG. 16, the 3D display system 100 may be included in a head-up display system 400. The head-up display system 400 is also referred to as an HUD 400. The HUD 400 includes the 3D display system 100, an optical member 410, and a projection reception member 420 including a projection screen 430. The HUD 400 directs image light from the 3D display system 100 to reach the projection reception member 420 through the optical member 410. The HUD 400 directs image light reflected on the projection reception member 420 to reach the left eye and the right eye of a user. In other words, the HUD 400 directs the image light to travel from the 3D display system 100 to the user's left and right eyes along an optical path 440 indicated by a broken line. The user can thus view image light reaching the eyes along the optical path 440 as a virtual image 450.

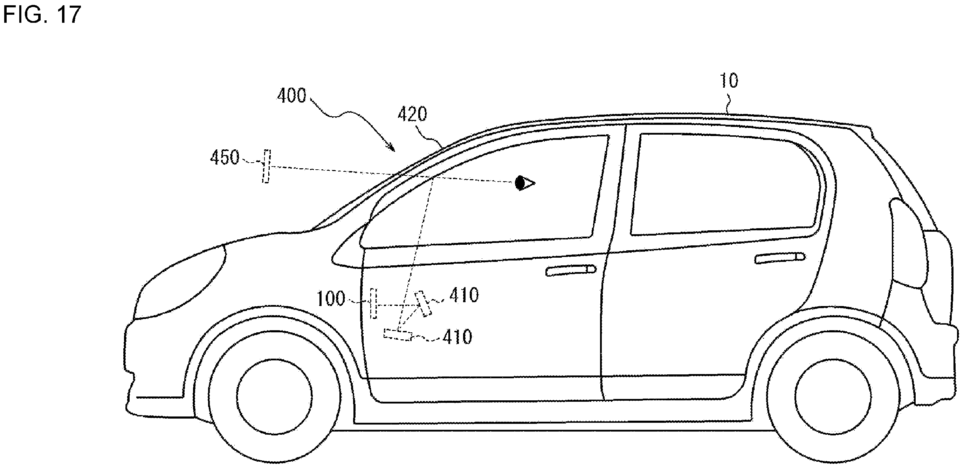

As shown in FIG. 17, the HUD 400 including the 3D display system 200 may be mounted on a movable object 10. The HUD 400 may include components that also serve as other devices or components included in the movable object 10. For example, the movable object 10 may use a windshield as the projection reception member 420. The devices or components of the movable object 10 serving as devices or components included in the HUD 400 may be referred to as HUD modules or 3D display components. The HUD 400 and the 3D display system 100 may be mounted on the movable object 10. The movable object according to one or more embodiments of the present disclosure includes a vehicle, a vessel, or an aircraft. The vehicle according to one or more embodiments of the present disclosure includes, but is not limited to, an automobile or an industrial vehicle, and may also include a railroad vehicle, a community vehicle, or a fixed-wing aircraft traveling on a runway. The automobile includes, but is not limited to, a passenger vehicle, a truck, a bus, a motorcycle, or a trolley bus, and may also include another vehicle traveling on a road. The industrial vehicle includes an agricultural vehicle or a construction vehicle. The industrial vehicle includes, but is not limited to, a forklift or a golf cart. The agricultural vehicle includes, but is not limited to, a tractor, a cultivator, a transplanter, a binder, a combine, or a lawn mower. The construction vehicle includes, but is not limited to, a bulldozer, a scraper, a power shovel, a crane vehicle, a dump truck, or a road roller. The vehicle includes a man-powered vehicle. The classification of the vehicle is not limited to the above. For example, the automobile may include an industrial vehicle traveling on a road, and one type of vehicle may fall within a plurality of classes. The vessel according to one or more embodiments of the present disclosure includes a jet ski, a boat, or a tanker. The aircraft according to one or more embodiments of the present disclosure includes a fixed-wing aircraft or a rotary-wing aircraft.

The present disclosure may be implemented in the following forms.

A three-dimensional display device according to one or more embodiments of the present disclosure includes a display panel, an optical panel, and a controller. The display panel includes a plurality of display elements. The plurality of display elements display a parallax image. The optical panel defines a traveling direction of image light emitted from each of the plurality of display elements. The controller controls the parallax image based on a position of a first eye of a user and a position of a second eye of the user. The parallax image includes a first image including a plurality of first pixels corresponding to the first eye of the user, and a second image including a plurality of second pixels corresponding to the second eye of the user. The parallax image includes the plurality of first pixels and the plurality of second pixels being repeatedly arranged alternately in a parallax direction. The controller causes a predetermined proportion of the plurality of first pixels and the plurality of second pixels to display a black image. The predetermined proportion is determined to cause, for the first eye and the second eye of the user at a predetermined reference position, a black image to be displayed by a pixel at one end or two ends of a plurality of first areas viewable to the first eye of the user and not viewable to the second eye in the parallax direction and by a pixel at one end or two ends of a plurality of second areas viewable to the second eye and not viewable to the first eye in the parallax direction.

A controller according to one or more embodiments of the present disclosure is a controller for performing operations including causing a composite image including a first image and a second image having parallax with the first image to be displayed in an active area including a plurality of subpixels based on a position of a first eye of a user and a position of a second eye of the user different from the first eye. The controller causes a predetermined proportion of the plurality of subpixels to display a black image. The plurality of subpixels in the active area include a plurality of first subpixels to emit image light to reach the position of the first eye and not to reach the position of the second eye. The plurality of subpixels in the active area include a plurality of second subpixels to emit image light to reach the position of the second eye and not to reach the position of the first eye. The predetermined proportion is determined to cause, for the first eye and the second eye of the user at a predetermined reference position, a black image to be displayed at one end or two ends of the plurality of first subpixels in a parallax direction and at one end or two ends of the plurality of second subpixels in the parallax direction.

A three-dimensional display method according to one or more embodiments of the present disclosure is implementable by a three-dimensional display device including a display panel, an optical element, an obtainer, and a controller. The display panel includes an active area including a plurality of subpixels to display a composite image including a first image and a second image having parallax with the first image. The optical element defines a traveling direction of image light emitted from the active area. The obtainer obtains a position of a first eye of a user and a position of a second eye of the user different from the first eye. The controller causes the composite image to be displayed in the active area based on the position of the first eye and the position of the second eye. The method includes determining, with the controller, based on the position of the first eye and the position of the second eye different from the first eye, a plurality of first subpixels in the active area to emit image light to reach the position of the first eye and not to reach the position of the second eye. The method includes determining, with the controller, based on the position of the first eye and the position of the second eye different from the first eye, a plurality of second subpixels in the active area to emit image light to reach the position of the second eye and not to reach the position of the first eye. The method includes causing, with the controller, a black image to be displayed at one end or two ends of the plurality of first subpixels in a parallax direction and at one end or two ends of the plurality of second subpixels in the parallax direction.

A three-dimensional display system according to one or more embodiments of the present disclosure includes a detector, a display panel, an optical element, an obtainer, and a controller. The detector detects a position of a first eye of a user and a position of a second eye of the user different from the first eye. The display panel includes an active area to display a composite image including a first image and a second image having parallax with the first image. The optical element defines a traveling direction of image light emitted from the active area. The obtainer obtains the position of the first eye of the user and the position of the second eye different from the first eye. The controller causes the composite image to be displayed in the active area based on the position of the first eye and the position of the second eye. The active area includes a plurality of subpixels. The controller causes a predetermined proportion of the plurality of subpixels to display a black image. The plurality of subpixels in the active area include a plurality of first subpixels to emit image light to reach the position of the first eye and not to reach the position of the second eye. The plurality of subpixels in the active area include a plurality of second subpixels to emit image light to reach the position of the second eye and not to reach the position of the first eye. The predetermined proportion is determined to cause, for the first eye and the second eye of the user at a predetermined reference position, a black image to be displayed at one end or two ends of the plurality of first subpixels in a parallax direction and at one end or two ends of the plurality of second subpixels in the parallax direction.

A movable object according to one or more embodiments of the present disclosure includes a three-dimensional display device. The three-dimensional display device includes a display panel, an optical element, an obtainer, and a controller. The display panel includes an active area to display a composite image including a first image and a second image having parallax with the first image. The optical element defines a traveling direction of image light emitted from the active area. The obtainer obtains a position of a first eye of a user and a position of a second eye of the user different from the first eye. The controller causes the composite image to be displayed in the active area based on the position of the first eye and the position of the second eye. The active area includes a plurality of subpixels. The controller causes a predetermined proportion of the plurality of subpixels to display a black image. The plurality of subpixels in the active area include a plurality of first subpixels to emit image light to reach the position of the first eye and not to reach the position of the second eye. The plurality of subpixels in the active area include a plurality of second subpixels to emit image light to reach the position of the second eye and not to reach the position of the first eye. The predetermined proportion is determined to cause, for the first eye and the second eye of the user at a predetermined reference position, a black image to be displayed at one end or two ends of the plurality of first subpixels in a parallax direction and at one end or two ends of the plurality of second subpixels in the parallax direction.

The three-dimensional display device and other techniques according to one or more embodiments of the present disclosure reduce crosstalk.

The present disclosure may be embodied in various forms without departing from the spirit or the main features of the present disclosure. The embodiments described above are thus merely illustrative in all respects. The scope of the present disclosure is defined not by the description given above but by the claims. Any modifications and alterations contained in the claims fall within the scope of the present disclosure. Reference Signs List

| 1 | detector |
|---|---|
| 2 | three-dimensional (3D) display device |
| 3 | obtainer |
| 4 | illuminator |
| 5 | display panel |
| 6 | parallax barrier |
| 7 | controller |
| 8 | memory |
| 10 | movable object |
| 51 | active area |
| 51aL | left viewable area |
| 51aR | right viewable area |
| 51aLR | binocular viewable area |
| 61 | less-transmissive portion |
| 62 | transmissive portion |
| 63L | boundary 63Rboundary |
| 100 | 3D display system |
| 400 | head-up display (HUD) system |
| 410 | optical member |
| 420 | projection reception member |
| 430 | projection screen |
| 440 | optical path |
| 450 | virtual image |

**Claims**

1.  A three-dimensional display device, comprising:

    a display panel including a plurality of display elements, the plurality of display elements being configured to display a parallax image;
    an optical panel configured to define a traveling direction of image light emitted from each of the plurality of display elements; and
    a controller configured to control the parallax image based on a position of a first eye of a user and a position of a second eye of the user, wherein the parallax image includes
    a first image including a plurality of first pixels corresponding to the first eye of the user, and
    a second image including a plurality of second pixels corresponding to the second eye of the user,

the parallax image includes the plurality of first pixels and the plurality of second pixels being repeatedly arranged alternately in a parallax direction,

the controller causes a predetermined proportion of the plurality of first pixels and the plurality of second pixels to display a black image, and the predetermined proportion is determined to cause, for the first eye and the second eye of the user at a predetermined reference position, a black image to be displayed by a pixel at one end or two ends of a plurality of first areas viewable to the first eye of the user and not viewable to the second eye in the parallax direction and by a pixel at one end or two ends of a plurality of second areas viewable to the second eye and not viewable to the first eye in the parallax direction.

2. The three-dimensional display device according to claim 1, wherein

an aperture ratio is 37.5% or less and a black image ratio is 25% or more, or the aperture ratio is 45.6% or less and the black image ratio is 50% or more, where the aperture ratio is a percentage of an area on the display panel viewable to the first eye of the user through the optical panel and an area on the display panel viewable to the second eye of the user through the optical panel, and the black image ratio is a percentage of pixels on the display panel to display a black image.

3. The three-dimensional display device according to claim 1 or claim 2, wherein

the controller determines the plurality of first areas and the plurality of second areas based on the position of the first eye and the position of the second eye of the user, and causes a black image to be displayed by a pixel at one end or two ends of pixels in each of the plurality of first areas in the parallax direction and by a pixel at one end or two ends of pixels in each of the plurality of second areas in the parallax direction.

4. A controller for performing operations comprising:

causing a composite image including a first image and a second image having parallax with the first image to be displayed in an active area including a plurality of subpixels based on a position of a first eye of a user and a position of a second eye of the user different from the first eye; and

causing a predetermined proportion of the plurality of subpixels to display a black image, the plurality of subpixels in the active area including a plurality of first subpixels to emit image light to reach the position of the first eye and not to reach the position of the second eye, the plurality of subpixels in the active area including a plurality of second subpixels to emit image light to reach the position of the second eye and not to reach the position of the first eye, wherein the predetermined proportion is determined to cause, for the first eye and the second eye of the user at a predetermined reference position, a black image to be displayed at one end or two ends of the plurality of first subpixels in a parallax direction and at one end or two ends of the plurality of second subpixels in the parallax direction.

5. The controller according to claim 4, wherein

an aperture ratio is 37.5% or less and a black image ratio is 25% or more, or the aperture ratio is 45.6% or less and the black image ratio is 50% or more, where the aperture ratio is a percentage of an area in the active area viewable to the first eye of the user and an area in the active area viewable to the second eye of the user, and the black image ratio is a percentage of subpixels in the active area to display a black image.

6. The controller according to claim 4 or claim 5, wherein

the controller determines the plurality of first subpixels and the plurality of second subpixels based on the position of the first eye and the position of the second eye of the user, and causes a black image to be displayed by a subpixel at one end or two ends of the plurality of first subpixels in the parallax direction and by a subpixel at one end or two ends of the plurality of second subpixels in the parallax direction.

7. A three-dimensional display method implementable by a three-dimensional display device including a display panel including an active area including a plurality of subpixels to display a composite image including a first image and a second image having parallax with the first image, an optical element configured to define a traveling direction of image light emitted from the active area, an obtainer configured to obtain a position of a first eye of a user and a position of a second eye of the user different from the first eye, and a controller configured to cause the composite image to be displayed in the active area based on the position of the first eye and the position of the second eye, the method comprising:

determining, with the controller, based on the position of the first eye and the position of the second eye different from the first eye, a plurality of first subpixels in the active area to emit image light to reach the position of the first eye and not to reach the position of the second eye;

determining, with the controller, based on the position of the first eye and the position of the second eye different from the first eye, a plurality of second subpixels in the active area to emit image light to reach the position of the second eye and not to reach the position of the first eye; and

causing, with the controller, a black image to be displayed at one end or two ends of the plurality of first subpixels in a parallax direction and at one end or two ends of the plurality of second subpixels in the parallax direction.

8. A three-dimensional display system, comprising:

a detector configured to detect a position of a first eye of a user and a position of a second eye of the user different from the first eye; and

a three-dimensional display device including

a display panel including an active area to display a composite image including a first image and a second image having parallax with the first image,
an optical element configured to define a traveling direction of image light emitted from the active area,
an obtainer configured to obtain the position of the first eye of the user and the position of the second eye different from the first eye, and
a controller configured to cause the composite image to be displayed in the active area based on the position of the first eye and the position of the second eye,

wherein the active area includes a plurality of subpixels, the controller causes a predetermined proportion of the plurality of subpixels to display a black image, the plurality of subpixels in the active area include a plurality of first subpixels to emit image light to reach the position of the first eye and not to reach the position of the second eye, the plurality of subpixels in the active area include a plurality of second subpixels to emit image light to reach the position of the second eye and not to reach the position of the first eye, and the predetermined proportion is determined to cause, for the first eye and the second eye of the user at a predetermined reference position, a black image to be displayed at one end or two ends of the plurality of first subpixels in a parallax direction and at one end or two ends of the plurality of second subpixels in the parallax direction.

9. A movable object, comprising:

a three-dimensional display device including

a display panel including an active area to display a composite image including a first image and a second image having parallax with the first image,
an optical element configured to define a traveling direction of image light emitted from the active area,
an obtainer configured to obtain a position of a first eye of a user and a position of a second eye of the user different from the first eye, and
a controller configured to cause the composite image to be displayed in the active area based on the position of the first eye and the position of the second eye,

wherein the active area includes a plurality of subpixels, the controller causes a predetermined proportion of the plurality of subpixels to display a black image, the plurality of subpixels in the active area include a plurality of first subpixels to emit image light to reach the position of the first eye and not to reach the position of the second eye, the plurality of subpixels in the active area include a plurality of second subpixels to emit image light to reach the position of the second eye and not to reach the position of the first eye, and the predetermined proportion is determined to cause, for the first eye and the second eye of the user at a predetermined reference position, a black image to be displayed at one end or two ends of the plurality of first subpixels in a parallax direction and at one end or two ends of the plurality of second subpixels in the parallax direction.

FIG. 1

EP 4 040 218 A1

EP 4 040 218 A1

FIG. 2

FIG. 3

EP 4 040 218 A1

FIG. 4

FIG. 5

FIG. 6

# FIG. 7

| 51aL | | | | | | 51aR | | | | | | 51aL | | | | | | 51aR | | | | | |
|---|---|---|---|---|---|---|---|---|---|---|---|---|---|---|---|---|---|---|---|---|---|---|---|
| P1 B | P2 L | P3 L | P4 L | P5 L | P6 B | P7 B | P8 R | P9 R | P10 R | P11 R | P12 B | P1 B | P2 L | P3 L | P4 L | P5 L | P6 B | P7 B | P8 R | P9 R | P10 R | P11 R | P12 B |
| P12 B | P1 B | P2 L | P3 L | P4 L | P5 L | P6 B | P7 B | P8 R | P9 R | P10 R | P11 R | P12 B | P1 B | P2 L | P3 L | P4 L | P5 L | P6 B | P7 B | P8 R | P9 R | P10 R | P11 R |
| P11 R | P12 B | P1 B | P2 L | P3 L | P4 L | P5 L | P6 B | P7 B | P8 R | P9 R | P10 R | P11 R | P12 B | P1 B | P2 L | P3 L | P4 L | P5 L | P6 B | P7 B | P8 R | P9 R | P10 R |
| P10 R | P11 R | P12 B | P1 B | P2 L | P3 L | P4 L | P5 L | P6 B | P7 B | P8 R | P9 R | P10 R | P11 R | P12 B | P1 B | P2 L | P3 L | P4 L | P5 L | P6 B | P7 B | P8 R | P9 R |
| P9 R | P10 R | P11 R | P12 B | P1 B | P2 L | P3 L | P4 L | P5 L | P6 B | P7 B | P8 R | P9 R | P10 R | P11 R | P12 B | P1 B | P2 L | P3 L | P4 L | P5 L | P6 B | P7 B | P8 R |
| P8 R | P9 R | P10 R | P11 R | P12 B | P1 B | P2 L | P3 L | P4 L | P5 L | P6 B | P7 B | P8 R | P9 R | P10 R | P11 R | P12 B | P1 B | P2 L | P3 L | P4 L | P5 L | P6 B | P7 B |
| P7 B | P8 R | P9 R | P10 R | P11 R | P12 B | P1 B | P2 L | P3 L | P4 L | P5 L | P6 B | P7 B | P8 R | P9 R | P10 R | P11 R | P12 B | P1 B | P2 L | P3 L | P4 L | P5 L | P6 B |

63R   63R  63L      63L  63R      63R  63L   63R

z — x, y

FIG. 8

EP 4 040 218 A1

FIG. 9

|  | 51aL |  |  | 51aR |  |  |  | 51aL |  |  | 51aR |  |  |  |
|---|---|---|---|---|---|---|---|---|---|---|---|---|---|---|
| P1 L | P2 L | P3 L | P4 L | P5 R | P6 R | P7 R | P8 R | P1 L | P2 L | P3 L | P4 L | P5 R | P6 R | P7 R | P8 R |
| P8 R | P1 L | P2 L | P3 L | P4 L | P5 R | P6 R | P7 R | P8 R | P1 L | P2 L | P3 L | P4 L | P5 R | P6 R | P7 R |
| P7 R | P8 R | P1 L | P2 L | P3 L | P4 L | P5 R | P6 R | P7 R | P8 R | P1 L | P2 L | P3 L | P4 L | P5 R | P6 R |
| P6 R | P7 R | P8 R | P1 L | P2 L | P3 L | P4 L | P5 R | P6 R | P7 R | P8 R | P1 L | P2 L | P3 L | P4 L | P5 R |
| P5 R | P6 R | P7 R | P8 R | P1 L | P2 L | P3 L | P4 L | P5 R | P6 R | P7 R | P8 R | P1 L | P2 L | P3 L | P4 L |
| P4 L | P5 R | P6 R | P7 R | P8 R | P1 L | P2 L | P3 L | P4 L | P5 R | P6 R | P7 R | P8 R | P1 L | P2 L | P3 L |

Pg

63R
63L

63L   63R        63R  63L        63L  63R        63R  63L

FIG. 10

FIG. 11

EP 4 040 218 A1

| 51aL | | | | 51aR | | | | 51aL | | | | 51aR | | | |
|---|---|---|---|---|---|---|---|---|---|---|---|---|---|---|---|
| P1 B | P2 L | P3 L | P4 B | P5 B | P6 R | P7 R | P8 B | P1 B | P2 L | P3 L | P4 B | P5 B | P6 R | P7 R | P8 B |
| P8 R | P1 B | P2 L | P3 L | P4 B | P5 B | P6 R | P7 R | P8 B | P1 B | P2 L | P3 L | P4 L | P5 B | P6 R | P7 R |
| P7 R | P8 B | P1 B | P2 L | P3 L | P4 B | P5 B | P6 R | P7 R | P8 B | P1 B | P2 L | P3 L | P4 B | P5 B | P6 R |
| P6 R | P7 R | P8 B | P1 B | P2 L | P3 L | P4 B | P5 B | P6 R | P7 R | P8 B | P1 B | P2 L | P3 L | P4 B | P5 B |
| P5 B | P6 R | P7 R | P8 B | P1 B | P2 L | P3 L | P4 B | P5 B | P6 R | P7 R | P8 B | P1 B | P2 L | P3 L | P4 B |
| P4 B | P5 B | P6 R | P7 R | P8 B | P1 B | P2 L | P3 L | P4 B | P5 B | P6 R | P7 R | P8 B | P1 B | P2 L | P3 L |

Pg

63R

63L

63L 63R 63R 63L 63L 63R 63R 63L

z ⊗ → x
y

# FIG. 12

Start

Obtain first eye and second eye positions ～S01

Determine first subpixels to emit image light that reaches first eye position and does not reach second eye position ～S02

Determine second subpixels to emit image light that reaches second eye position and does not reach first eye position ～S03

Determine to display black image on subpixels at one or both ends of first subpixels and second subpixels in parallax direction ～S04

Display parallax image ～S05

End

FIG. 13

EP 4 040 218 A1

EP 4 040 218 A1

## FIG. 14

z ⊗ → x
↓ y

|  | 51aL |  |  |  | 51aR |  |  |  | 51aL |  |  |  | 51aR |  |  |
|---|---|---|---|---|---|---|---|---|---|---|---|---|---|---|---|
| P1 R | P2 B | P3 B | P4 L | P5 L | P6 B | P7 B | P8 R | P1 R | P2 B | P3 N | P4 L | P5 L | P6 B | P7 B | P8 R |
| P8 R | P1 R | P2 B | P3 B | P4 L | P5 L | P6 B | P7 B | P8 R | P1 R | P2 B | P3 B | P4 L | P5 L | P6 B | P7 B |
| P7 B | P8 R | P1 R | P2 B | P3 B | P4 L | P5 L | P6 B | P7 B | P8 R | P1 R | P2 B | P3 B | P4 L | P5 L | P6 B |
| P6 B | P7 B | P8 R | P1 R | P2 B | P3 B | P4 L | P5 L | P6 B | P7 B | P8 R | P1 R | P2 B | P3 B | P4 L | P5 L |
| P5 L | P6 B | P7 B | P8 R | P1 R | P2 B | P3 B | P4 L | P5 L | P6 B | P7 B | P8 R | P1 R | P2 B | P3 B | P4 L |
| P4 L | P5 L | P6 B | P7 B | P8 R | P1 R | P2 B | P3 B | P4 L | P5 L | P6 B | P7 B | P8 R | P1 R | P2 B | P3 B |

63R
63L

63L 63R    63R 63L    63L 63R    63R 63L

FIG. 15

EP 4 040 218 A1

FIG. 16

FIG. 17

EP 4 040 218 A1

## INTERNATIONAL SEARCH REPORT

International application No.

PCT/JP2020/037463

### A. CLASSIFICATION OF SUBJECT MATTER

Int.Cl. G02B30/00(2020.01)i, G02B27/01(2006.01)i, G02F1/13(2006.01)i, G03B35/18(2021.01)i, H04N13/125(2018.01)i, H04N13/31(2018.01)i, H04N13/317(2018.01)i, H04N13/346(2018.01)i, H04N13/363(2018.01)i, H04N13/366(2018.01)i, H04N13/376(2018.01)i
FI: G02B30/00, G02B27/01, H04N13/31, H04N13/346, H04N13/363, H04N13/366, G02F1/13505, G03B35/18, H04N13/125, H04N13/317, H04N13/376
According to International Patent Classification (IPC) or to both national classification and IPC

### B. FIELDS SEARCHED

Minimum documentation searched (classification system followed by classification symbols)
Int.Cl. G02B30/00, G02B27/01, G02F1/13, G03B35/18, H04N13/125, H04N13/31, H04N13/317, H04N13/346, H04N13/363, H04N13/366, H04N13/376

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-44769 A (JAPAN DISPLAY INC.) 02 March 2017 (2017-03-02), paragraphs [0010]-[0084], fig. 1-15 | 1-8<br>9 |
| Y | WO 2019/163717 A1 (KYOCERA CORPORATION) 29 August 2019 (2019-08-29), paragraphs [0008]-[0030], fig. 1-4 | 9 |
| X<br>Y | WO 2012/176445 A1 (PANASONIC CORPORATION) 27 December 2012 (2012-12-27), paragraphs [0011]-[0082], fig. 1-12 | 1-8<br>9 |
| A | US 2019/0268589 A1 (LU et al.) 29 August 2019 (2019-08-29), paragraphs [0003]-[0173], fig. 1-16 | 1-9 |

☐ Further documents are listed in the continuation of Box C.        ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>    13 November 2020 | Date of mailing of the international search report<br>    24 November 2020 |
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

| INTERNATIONAL SEARCH REPORT | International application No. |
|---|---|
| Information on patent family members | PCT/JP2020/037463 |

| | | | |
|---|---|---|---|
| JP 2017-44769 A | 02 March 2017 | US 2017/0061908 A1 paragraphs [0025]-[0102], fig. 1-15 | |
| WO 2019/163717 A1 | 29 August 2019 | (Family: none) | |
| WO 2012/176445 A1 | 27 December 2012 | US 2014/0098205 A1 paragraphs [0022]-[0101], fig. 1-12 CN 103621077 A | |
| US 2019/0268589 A1 | 29 August 2019 | CN 107092097 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7287196 A